# EUROPEAN PATENT APPLICATION

(11) **EP 1 389 598 A1**
(43) Date of publication of application: **18.02.2004**
(21) Application number: 02720578.0
(22) Date of filing: 23.04.2002
(51) Int. Cl.: B65G 61/00, G06F 17/60

(54) **METHOD AND SYSTEM FOR PHYSICAL DISTRIBUTION CONTROL**

(30) Priority: 24.04.2001 JP 2001126461
(71) Applicant: NTI, Inc., Yokkaichi-shi, Mie 512-8044 (JP)
(72) Inventor: NAKAMURA, Takatoshi, Yokkaichi-shi, Mie 512-8044 (JP)
(74) Representative: Grünecker, Kinkeldey, Stockmair & Schwanhäusser Anwaltssozietät
(86) International application number: PCT/JP2002/004041
(87) International publication number: WO 2002/088008

(57) **Abstract**

A method and a device for physical distribution control capable of distributing a cargo under the control of a consignee in a cargo distribution method for distributing the cargo from a consignor to the consignee, wherein cargo information is notified to the consignee, the consignee specifies a distributed place and a distributed date based on the notified cargo information to the consignor, and the consignor distributes the cargo based on the instruction from the consignee, whereby the storage, transfer, and delivery of the cargo can be performed at the convenience of the consignee.

## Description

### Field of the Invention

This invention relates to a logistics control method and a logistics control system, specialized in such method and system used in distributing cargo from consignor to consignee.

### Description of the Prior Art

Usually, when consignor distributes cargo to consignee, cargo and delivery information are transmitted to distributor concurrently. Distributor then distributes cargo to consignee according to consignor's instruction. Such makes consignee not knowing whether cargo has been sent out until cargo already distributed.

So, within previous logistics module, distributor couldn't distribute cargo according to consignee's actual condition for consignee does not know cargo already delivered before arriving. When consignee is not available, as a possible result, consignee can't accept cargo even it has been carried on-site. On the other hand, there are also other possible defects like consignee doesn't have suitable place for storing cargo after delivered. In order to resolve such problems, some developments have been taken on prior art by adding system indicating distributed date informed by consignor. Yet such instruction still comes from the consignor, not including actual condition of consignee. So the issue still exists.

### Summary of the Invention

The invention aims at providing a logistics control method and logistics control system on controlling logistics in light of the instruction from consignee.

In order to achieve such purposes, in the invention, cargo is distributed according to instruction on distributed date and distributed place from consignee.

So, it's required to inform consignee of cargo information before cargo distribution, or inform consignee of cargo information by consignor.

Furthermore, in the invention, cargo is stored in definite storage in advance, then distributed according to distributed date and distributed place required by consignee.

The invention could build database of consignee information collected when cargo is distributed to consignee, and get information before next distribution referring to the database, then re-confirm consignee in light of the information and distribute cargo accordingly.

In the invention, cargo can be bought/sold in light of consignee's instruction before cargo distribution.
So, the invention is not intended to make cargo transferred actually, but make high-efficiency distribution through cargo dealing.

### Figures explanation

Fig 1 is the system structure diagram of the invention.
Fig 2 is data structure diagram of cargo information in the invention.
Fig 3 is distributor terminal structure diagram in the invention.
Fig 4 is data structure diagram of consignee database in the invention.
Fig 5 is cargo distribution process diagram from consignor to consignee in the invention.
Fig 6 is other cargo distribution process diagram from consignor to consignee in the invention.
Fig 7 is distribution process diagram in the invention.
Fig 8 illustrates cargo right dealing in the invention.
Fig 9 shows the modified right dealing in the invention.

### Preferable implementation example of this invention

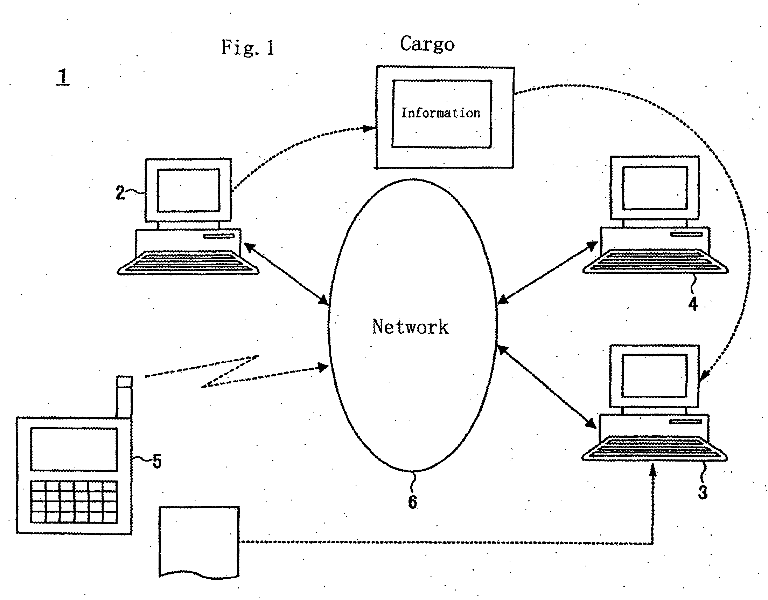

Referring to Fig 1, system 1 of this invention is composed by consignor terminal 2, distributor terminal 3, consignee terminal 4, distributor mini terminal 5 and network 6.

Consignor terminal 2 is composed by cell phone or PC and other instruments and connected with network 6. It can also communicate with distributor terminal 3 and consignee terminal 4 through network 6. Distributor terminal 3 is composed by PC and other instruments, and connected with network 6. Distributor terminal 3 communicates with consignor terminal 2 and consignee terminal 4 by using network 6. Consignee terminal 4 consists of cell phone or PC and other instruments, also connecting with network 6 and communicating with consignor terminal 2 and distributor terminal 3 in the same way.

Distributor mini terminal 5 is built up by computers and other instruments and connected with network 6 though wireless circuit. It could communicate with distributor terminal 3 though network 6.

Network 6 includes normal telephone network, Internet, mobile network, LAN, etc. It acts as commutation media among consignor terminal 2, distributor terminal 3, distributor terminal 4 and distributor mini-terminal 5.

Consignor terminal 2 or distributor terminal 3 could use email or other means to inform distributor terminal 4 of cargo information through network 6.

Blow is the detailed illustration of cargo information.

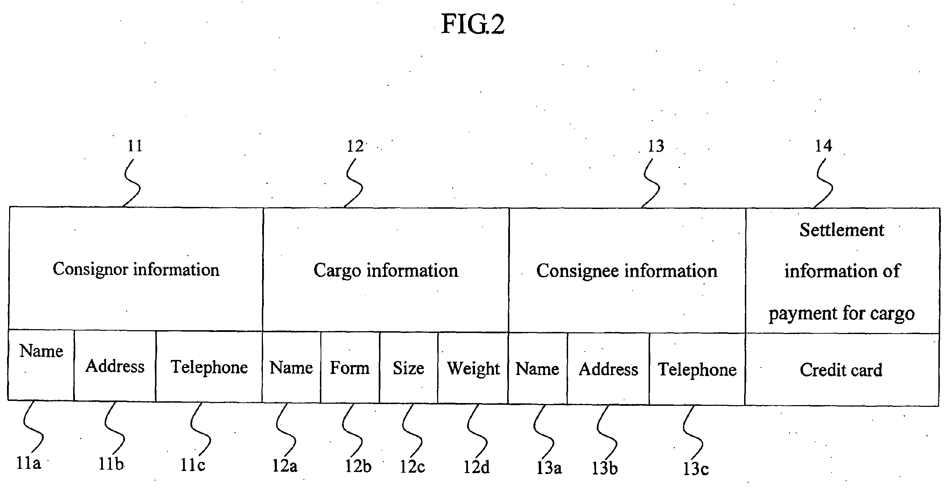

Referring to Fig 2, cargo information 10 consists of consignor information 11, cargo information 12, consignee information 13 and settlement information of payment for cargo 14, etc.

Consignor information 11 is the information to identify consignor. It consists of consignor name 11a, address 11b, telephone number 11c and other elements. Cargo information 12 consists of cargo name 12a, form 12b, size 12c, and weight 12d. Name 12a is information to distinguish cargo from clothes, breakable goods, food, etc. Form 12b is appearance information to identify box, paper bag, etc. Size 12c is cargo information about length, width and height. Weight 12d is information about how heavy of the cargo.

Consignee information 13 is information to identify consignee, consisting of consignee name 13a, address 13b, telephone number 13c. Settlement information of payment for cargo 14 is information to distinguish among payment ways, including credit card, bank remittance, post remittance, etc.

Below is a detailed illustration of distributor terminal 3 acting as main part of this example.

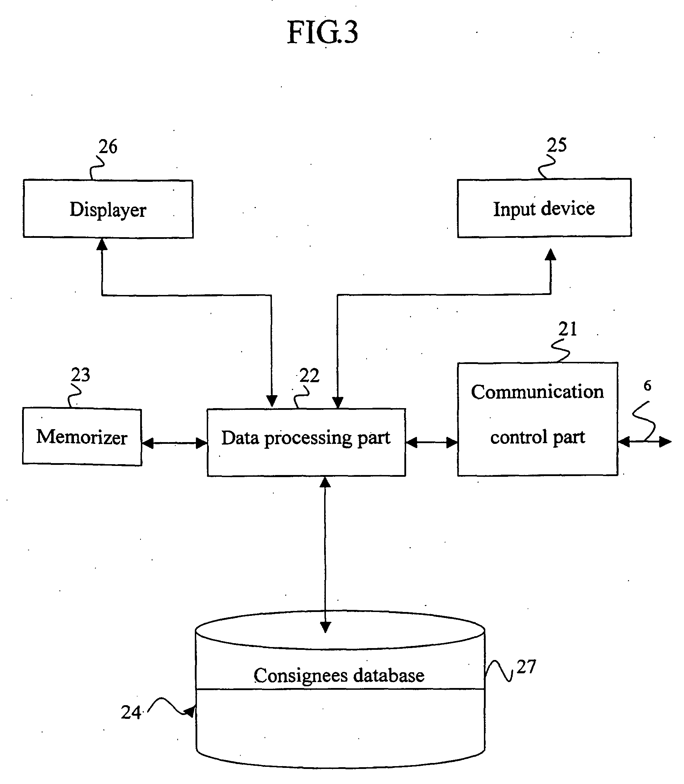

Referring to Fig 3, distributor terminal 3 mainly consists of communication control part 21, data processing part 22, memorizer 23, memory device 24, input device 25 and displayer 26.

Communication control part 21 is connected with network 6 to control the communication. Data processing part 22 deals with data processing in light of definite process. Memorizer 23 acts as storing section of data processing part 22.

Memory device 24 saves consignees database 27 and program concurrently. The cargo is delivered in light of the consignee database 27 stored in memory device 24.

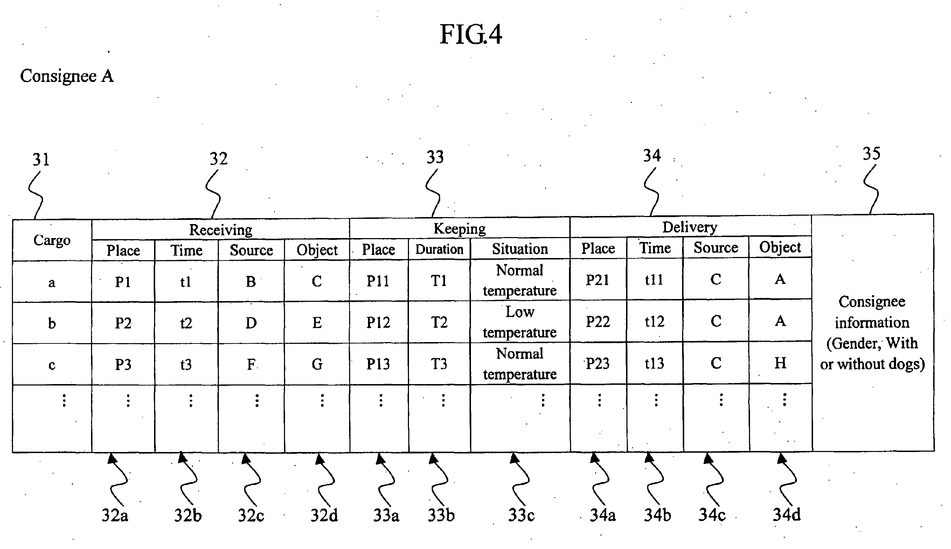

Referring to Fig 4, consignee database 27 based on consignee is built up with the cargo information and consignee information.

Fig 4 shows consignee database 30 of consignee A. Consignee database 30 consists of cargo information 31, receiving information 32, keeping information 33, delivery information 34 and consignee information 35, etc.

Cargo information 31 is information to identify consignee A owned cargo. Receiving information 32 includes receiving place 32a, receiving time 32b, receiving source 32c, receiving objects 32d, etc. Receiving place 32a is information about cargo collecting place. Receiving time 32b is information about cargo collecting time. Receiving source 32c is information about cargo receiving source. Receiving objects 32d is information to distinguish distributor who collects cargo.

Cargo keeping information 33 includes keeping place information 33a, keeping duration 33b, keeping situation 33c, etc. Keeping place information 33a is information to distinguish place for keeping cargo. Keeping duration 33b is information indicating keeping time. Keeping situation 33c is information indicating cargo situation while keeping, for example, information about normal temperature or low temperature.

Delivery information 34 includes delivery place information 34a, distributed date information 34b, delivery source information 34c, delivery object 34d. Delivery place information 34a is information indicating from where cargo sends out. Distributed date information 34b is information about when send out the cargo. Delivery source information 34c is information to distinguish consignor. Delivery objects 34d is information to distinguish objects to be sent. Consignee's information 35 is information about consignees family structure and on-site condition like if there is house dog etc.

Distributor distributes cargo according to above consignee database 30. Furthermore, consignee database 30 could be updated in light of consignee's instruction.

Input device 15 is composed by keyboard, mouse, etc. and used for I/O of database. Displayer 16 consists of CRT or LCD or other means, used for displaying data.

Below is a detailed illustration of steps to transfer cargo from consignor to consignee.

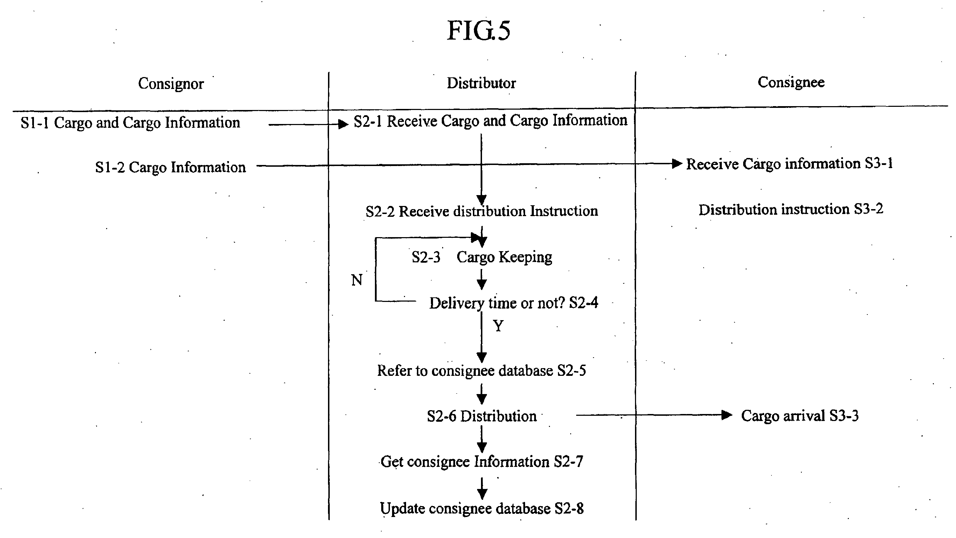

Referring to Fig 5, consignor sends cargo and cargo information to distributor in step S1-1, and in step S1-2 such information is transmitted from consignor terminal 2 to consignee terminal 4 through network 6 by emails or other means. Cargo information can also be transmitted by distributor terminal 3. Distributor keeps cargo after receiving cargo and cargo information in step S2-1. On the other hand, cargo information is input into distributor terminal 3.

Consignee gets cargo information in step S3-1 and sends out instruction on cargo distributed date and distributed place by emails or other means in step S3-2.

Distributor receives above information in step S2-2 and in step S2-3 keeps cargo prior to the mentioned date. Then, judges if the distributed date ends in step S2-4 and gets consignee information referring to consignee database in distributor terminal 3 in step S2-5.

In step S2-6, distributor confirms consignee in light of consignee information when delivering cargo. Thus, it's easy to confirm consignee in this step. In addition, if consignee is new, distributor records the confirmed results and update them in consignee database. Such can also be done by registering consignee database through network 6 by distributor mini-terminal 5. If there is new consignee information in step S2-7, consignee database will be updated in step S2-8.

Because the information about when and where to distribute cargo is supplied by consignee, distributor will not face the situation that consignee is not available when cargo is delivered, thus, cargo can reach the consignee safely. At the same time, consignee can also receive cargo conveniently at the time and place decided by himself. In addition, for the presence of consignee database, cargo transmission mistakes could be avoided by consignee confirmed information when conflict information exists.

Furthermore, consignor could also be cargo distributor.

In this example, consignor terminal 2 directly informs consignee terminal 4, also, which can been done through distributor terminal 3.

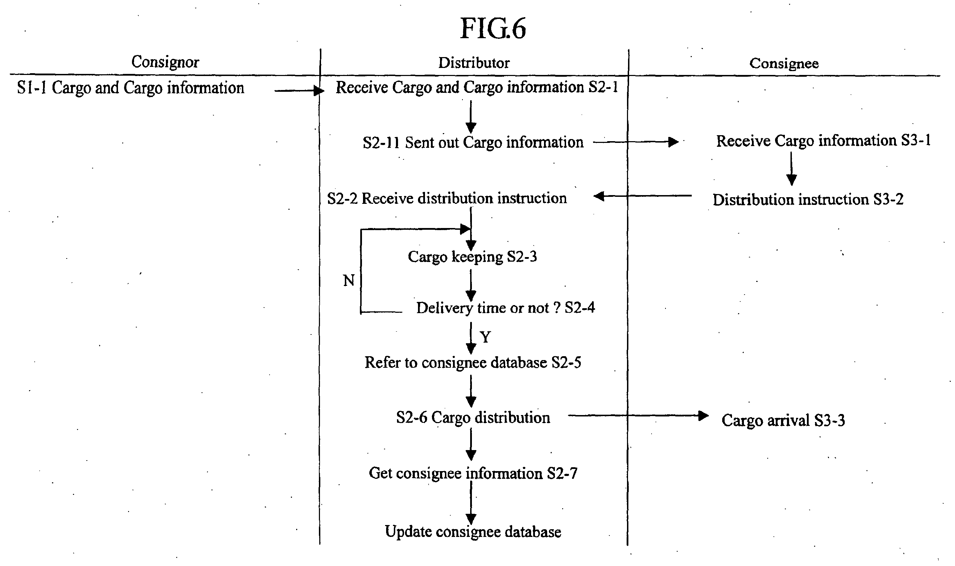

Referring to Fig 6, the common parts with Fig 1 and Fig 5 are not explained any more. In the example, in step S2-1 consignor transmits cargo and cargo information to distributor, then in step S2-11 distributor informs consignee of such information.

According to the example, the transmission could be dealt with in light of consignee's instruction at once, for cargo information has already been informed to consignee as soon as cargo and cargo information are transferred to distributor.

The example gives illustration on special consignor and consignee, such as in the condition that consignee and consignor are the same person there will be a fictitious cargo storing service. Such service could be named as "fictitious cabinet" or "individual warehouse" in the invention.

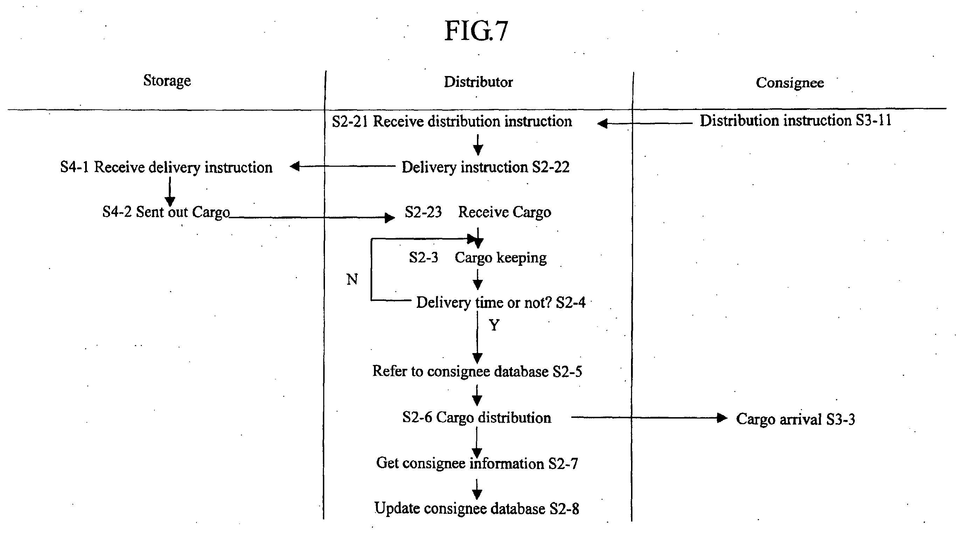

Refer to Fig 7. The common parts with Fig 4 are not explained any more. The example relates to the condition that when consignor and consignee are the same person cargo will be kept in a definite storage.

Firstly, consignee sends message to distributor terminal 3 by emails or other means through consignee terminal 4 in step S3-11 and informs distributor the preferred distributed date and place. Distributor receives such instruction through distributor terminal 3 in step S2-21. then in step S2-23 sends instruction to cargo storage referring to distributor database in step S2-22.

The cargo storage receives instruction from distributor in step S4-1, then sends cargo in step S4-2. Distributor receives cargo from cargo storage in step 52-24 and then delivers cargo to consignee per step S2-3 to step S2-8.

Fig 7 illustrates cargo distribution steps. When indicated to send cargo in step S3-11, distributor can also change distributed objects if distributor terminal 3 directs to other places.

The above description shows that logistics function and warehouse storage function can be connected according to the present invention.

For example, with such function, cargo to be distributed could be kept uniformly, also, settlement and distribution can be carried out weekly. Furthermore, if consignee plays golf in one place as Nagano and in the next week he will play golf in another place like Hokkaido, the invention can help to keep golf instrument temporarily and then transfer them from Nagano to Hokkaido directly.

In addition, for the case when consignee requires to distribute cargo to other place, he can inform distributor of cargo information and ask distributor distribute cargo to appointed consignee.

Furthermore, cargo dealing can be carried out anterior to storage or distribution, so it is convenient to exchange the cargo in the light of instruction. For example, there are so many presents in the festival, according to consignee instruction these presents can be distributed to other person or sold to the market before they are distributed to the consignee.

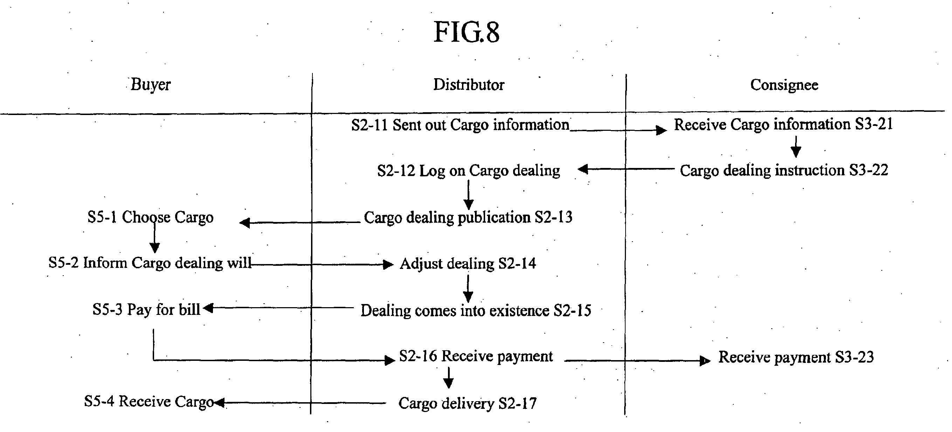

Referring to Fig 8, before distributor sends out cargo at step S2-11, he can send cargo information to consignee terminal 4 by email or other means from consignor terminal 2 or distributor terminal 3. Consignee gets such message at step S3-21, then decides whether he needs the cargo or not, if not, he can direct the consignor terminal 2 or distributor terminal 3 to deal with cargo by using the consignee terminal 4.

According to above instruction, consignor or distributor logs the cargo information on consignor terminal 2 or distributor terminal 3 at step S2-12 and at step S2-13 publishes such information on the net leaf which is used only for cargo dealing. At step S5-1 buyer chooses cargo on the net leaf, then he logs his will on the consignor terminal 2 or distributor terminal 3 at step S5-2. Consignor or distributor terminal will notify such message to consignee by email or other means.

At S2-14 consignor or distributor adjusts the price and sends such price to buyer terminal from their terminal 2 or 3. The dealing comes into existence at step S2-15, then consignor or distributor gives notice to the buyer by email.

After buyer receives the notice by terminal device, at step SS-3 he will pay the bill by using credit card or electron remittance, etc.

After receiving the payment for cargo at step S2-16, consignor or distributor will send out the cargo to buyer at step S2-17. In addition, at step S2-16, after they draws in some handling charge, they will give the payment for cargo to the consignee. At step S2-23, consignee gets the payment. The buyer draws cargo at step SS-4.

Thus, the cargo dealing ends.

According to the present example, cargo can be dealt with directly without being drawn, furthermore, it is unnecessary to transfer the cargo actually so that it can avoid some burden.

In the present example, dealing logging on ,purchase notification, etc, can be carried out with the carrier terminal 3, also, can be dealt with by using the special buy/sell servo system.

In the present example, consignor or distributor acts as the agency of buyer and consignee, on the other hand, they can buy the cargo from consignee.

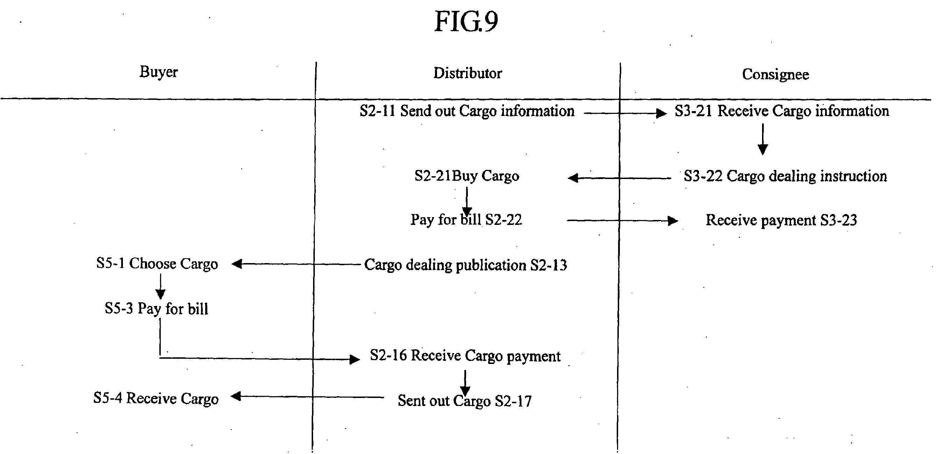

Referring to Fig 9, hereinto, the explanation of the same part as Fig 8 will be omitted. Firstly, at step S2-21 after distributor buys cargo from consignee, at step S2-22 he will pay the bill to consignee. At step S2-16 after consignor or distributor received the money from buyer, at step S2-17 he will distribute cargo to buyer. Consignor or distributor can give notice by the way of consignor terminal 2 or distributor terminal 3 through email or other means.

So on, cargo dealing is over. In the modified example, it is unnecessary to adjust the payment for cargo so that it can make the dealing easier.

In the example, payment for cargo is got from buyer. Also, cargo dealing can be carried out by exchange with equivalent between buyer and consignee.

In the present invention, as described above, firstly, cargo information is sent to consignee. Then consignee appoints cargo information on distributed date and distributed place to distributor. Lastly, distributor fulfills the distribution according to the instruction. So based on consignee's actual instance, cargo can be stored, transferred, distributed and so on

According to the present invention, cargo can be bought/sold according to consignee's instruction before distributed to consignee. Thus, it can improve the distribution efficiency because it does not need to draw or transfer cargo actually.

The present invention can't be limited to above applied modes, and applied modes can be various as long as they are connected with the substance.

## Claims

1. A logistics control method about controlling the logistics, **characterized in** controlling logistics according to the distribution information from consignee

2. A logistics control method as described in claim 1, **characterized in** its distribution information including at least distributed date and distributed place.

3. A logistics control method as described in claim 1 or 2, **characterized in** informing consignee of Cargo information while Cargo will be sent out.

4. A logistics control method as described in claim 3, **characterized in** Cargo information including the name, form, size and weight.

5. A logistics control method as described in claim 3 or 4, **characterized in** Cargo information is sent to consignee by consignor.

6. A logistics control method as described in any item among claim 1 to 5, **characterized in** Cargo is stored in a definite storage and then distributed according to consignee's instruction.

7. A logistics control method as described in any item among claim 1 to 6, **characterized in** keeping Cargo according to Cargo information.

8. A logistics control method, **characterized in** it includes the below steps:
Firstly, a database is built based on consignee information collected when Cargo distributed;
Secondly, consignee information is got referring to the database when Cargo will be distributed to consignee;
Lastly, confirm consignee in light of the consignee information and distribute Cargo accordingly.

9. A logistics control method about controlling logistics, **characterized in** Cargo can be bought/sold according to the consignee's instruction before distributed to consignee.

10. A logistics control system about controlling logistics, **characterized in** containing devices to control logistics according to the consignee's distribution information.

11. A logistics control system, **characterized in** containing below devices:
Database device to generate the database of the consignee information collected when Cargo is distributed to consignee;
Information taking device to get consignee information referring to the database when Cargo will be distributed.

12. A logistics control system about controlling logistics, **characterized in** containing logging on device which shows whether Cargo needs to be dealt with according to consignee instruction before Cargo distributed to consignee.
